# EUROPEAN PATENT APPLICATION

(11) **EP 4 610 078 A1**
(43) Date of publication of application: **03.09.2025**
(21) Application number: 24744367.4
(22) Date of filing: 18.01.2024
(51) Int. Cl.: B60K 1/04, B60L 53/80

(54) **BATTERY, SUPPORT AND VEHICLE**

(30) Priority: 20.01.2023 CN 202320142276 U
(71) Applicant: Contemporary Amperex Technology (Hong Kong) Limited, Central (HK)
(72) Inventor: CAO, Gen, Ningde, Fujian 352100 (CN); WU, Shouyong, Ningde, Fujian 352100 (CN); CHAN, Libing, Ningde, Fujian 352100 (CN); LIU, Bin, Ningde, Fujian 352100 (CN); JIANG, Yuwei, Ningde, Fujian 352100 (CN)
(74) Representative: Ziebig Hengelhaupt Intellectual Property Attorneys Patentanwaltskanzlei PartGmbB
(86) International application number: PCT/CN2024/073071
(87) International publication number: WO 2024/153197

(57) **Abstract**

A battery (1) is disclosed, including a battery body (10). The battery body includes a battery cell and a housing (12). The housing (12) defines a recess (13) that penetrates through the housing from one end to another end along a first direction (F1). The battery (1) is disposed at a bottom of a vehicle (1000). A bottom longitudinal beam (200) of the vehicle runs through and fits in the recess (13) along the first direction (F1). The housing (12) is provided with a plurality of first mounting structures (21). The first mounting structures (21) are configured to detachably mount the battery body (10) into the vehicle (1000). At least two of the plurality of first mounting structures (21) are spaced apart along a second direction (F2) and located on two sides outside the recess (13). The first direction (F1) intersects the second direction (F2). This application further discloses a bracket (4) matching the battery, and a vehicle (1000) containing the battery (1) or the bracket (4). The battery and the bracket in use can fully utilize space and increase an energy density. The battery is evenly stressed in the second direction and is stably mounted.

## Description

### CROSS-REFERENCE TO RELATED APPLICATIONS

This application claims priority to Chinese Patent Application No. 202320142276.8, filed by Contemporary Amperex Technology Co. Ltd. on January 20, 2023, which is incorporated herein by reference in its entirety.

### TECHNICAL FIELD

This application relates to the field of battery technology, and in particular, to a battery, a bracket, and a vehicle.

### BACKGROUND

In the related art, a housing of a battery generally includes no mounting structure. Before the battery is mounted into a vehicle, the battery needs to be put into a battery swap frame that accommodates the battery, and then the battery swap frame is fastened to the vehicle. Due to the use of the battery swap frame, the required mounting space is large, thereby making it difficult to increase the volumetric energy density of the battery in a case that the space at the bottom of the vehicle is limited, and in turn, adversely affecting the cruising range of the vehicle. In addition, the mounting stability of the battery in the vehicle is relatively low and needs to be improved.

### SUMMARY

Some embodiments of this application provide a battery to fully utilize space and increase the energy density. The battery is evenly stressed in a second direction and is stably mounted.

According to a first aspect, an embodiment of this application provides a battery. The battery includes a battery body. The battery body includes a battery cell and a housing configured to accommodate the battery cell. The housing defines a recess that penetrates through the housing from one end to another end along a first direction. The battery is adapted to be disposed at a bottom of a vehicle. A bottom longitudinal beam of the vehicle is adapted to run through and fit in the recess along the first direction. The housing is provided with a plurality of first mounting structures. The first mounting structures are located outside the recess and configured to detachably mount the battery body into the vehicle. At least two of the plurality of first mounting structures are spaced apart along a second direction and located on two sides outside the recess. The first direction intersects the second direction.

In the above technical solution, with the battery housing provided with a recess configured to avoid the bottom longitudinal beam and with the first mounting structures detachably connected to the vehicle, this application can efficiently utilize the space on the two sides of the bottom longitudinal beam, and can omit the battery swap frame required in the related art, thereby increasing the energy density or ground clearance of the battery, and being favorable for battery swap design. In addition, at least two first mounting structures are located on two sides outside the recess respectively, so that the battery can be mounted and fixed to the vehicle from two sides outside the recess, so as to improve the uniformity of stress on the battery in the second direction, increase the mounting span, and improve the mounting stability.

In some embodiments, at least two of the plurality of first mounting structures are disposed on a top wall or a bottom wall of the housing or on end walls at two ends of the housing along the first direction. In the above technical solution, with the first mounting structures disposed on the top wall of the housing, the first mounting structures can be protected through the battery. With the first mounting structures disposed on the bottom wall or the end walls of the housing, the disassembly operation and observation during mounting are facilitated.

In some embodiments, at least two of the plurality of first mounting structures are disposed on end walls of the housing at two ends along a second direction. In the above technical solution, the effect of improving the mounting stability and reliability of the battery is stronger.

In some embodiments, the housing is provided with mounting slots at end portions of the housing at two ends along a second direction. The first mounting structures are at least partially located in the mounting slots. In the above technical solution, the first mounting structures can be protected by the mounting slots.

In some embodiments, the mounting slots open toward the end portions away from the recess along the second direction. In the above technical solution, the mounting slots open toward the end portions of the housing, thereby facilitating the assembly of the first mounting structure to the vehicle and disassembly from the vehicle, and ensuring convenient operation and ensuring the battery to be mounted in place.

In some embodiments, the recess opens along a third direction. The bottom longitudinal beam is detachably mounted in the recess along the third direction. The mounting slots each open toward the same side as the recess along the third direction. Both the first direction and the second direction intersect the third direction. In the above technical solution, the process of fitting the bottom longitudinal beam into the recess can be performed at the same time as the process of connecting the first mounting structures to the vehicle, thereby simplifying the process of mounting the battery to the vehicle, facilitating the disassembly and assembly of the battery, and improving the efficiency of battery swap.

In some embodiments, the first mounting structures each are disposed on a slot wall, perpendicular to the second direction, of the mounting slot, or, the first mounting structures each are disposed on a slot wall, perpendicular to the third direction, of the mounting slot. In the above technical solution, when the first mounting structures is disposed on the slot wall perpendicular to the second direction, the position of the first mounting structure is not limited by the dimension of the mounting slot along the third direction, and the first mounting structure can be disposed more flexibly. When the first mounting structure is disposed on the slot wall perpendicular to the third direction, it is convenient to control the movement distance based on the status of fastening between the first mounting structure and the vehicle during the upward movement and mounting of the battery, and it is convenient to determine whether the battery is mounted in place.

In some embodiments, the mounting slots penetrate along the first direction. In the above technical solution, in the first direction, the length of a structure configured to be connected to the first mounting structure on the vehicle is not limited by the mounting slot.

In some embodiments, at least two of the first mounting structures are located at the same end of the housing along the second direction. The at least two first mounting structures located at the same end are spaced apart along the first direction. In the above technical solution, the plurality of first mounting structures located at the same end can mount the battery at a plurality of points over a larger span in the first direction. In addition, the first mounting structures at two ends mount the battery at a plurality of points in the second direction, thereby dispersing the stress and further improving the stability of battery being mounted.

In some embodiments, the housing is provided with second mounting structures. The second mounting structures are located inside the recess. In the above technical solution, the second mounting structure can connect the middle part of the housing to the vehicle in the second direction. In this way, the left end, the middle part, and the right end of the housing can all be connected to the vehicle, so as to disperse the stress on the battery, improve the stability of the connection between the battery and the vehicle, and avoid deformation or falling of the battery caused by a heavy weight and stress concentration of the battery.

In some embodiments, at least one of the second mounting structures is disposed on a sidewall, perpendicular to the second direction, of the recess; and/or, at least one of the second mounting structures is disposed on a sidewall, perpendicular to a third direction, of the recess. Both the first direction and the second direction intersect the third direction. In the above technical solution, when the second mounting structure is disposed on the sidewall, perpendicular to the second direction, of the recess, the second mounting structure is prevented from occupying space in the height direction, thereby increasing the ground clearance of the battery. When the second mounting structure is disposed on the sidewall, perpendicular to the third direction, of the recess, the space occupied by the second mounting structure in the horizontal direction can be reduced, and the space utilization rate of the battery in the horizontal direction can be improved.

In some embodiments, the second mounting structures are disposed separately on two sidewalls of the recess that are opposite to each other along the second direction. In the above technical solution, the distance between the second mounting structures on the two sidewalls is relatively close. In this way, it is easy to improve the precision of the relative position of the second mounting structures on the two sides of the bottom longitudinal beam and reduce the difficulty of processing. In addition, in replacing the battery, due to the high precision of the relative position of the second mounting structures on the two sidewalls, it is easy to align each of the second mounting structures on the two sides with the mounting position, thereby reducing the difficulty of battery swap and improving the efficiency of battery swap.

In some embodiments, there are a plurality of second mounting structures disposed on the sidewall, perpendicular to the third direction, of the recess. At least two of the second mounting structures are arranged along the second direction. In the above technical solution, a plurality of second mounting structures can connect the battery to the vehicle from a plurality of points in the transverse direction of the vehicle, thereby improving the stability of the connection between the battery and the vehicle.

According to a second aspect, an embodiment of this application further provides a bracket. The bracket is configured to mount the battery disclosed in the above embodiment onto a vehicle. The bracket includes: a bracket body, where the bracket body is mounted on the vehicle; and a first mounting base, where the first mounting base is connected to the bracket body. At least two first mounting bases are spaced apart along the second direction. The first mounting base is configured to mount a first connecting portion that is detachably connected to the first mounting structure.

In the above technical solution, at least two first mounting bases are spaced apart along the second direction, and are configured to mount the first connecting portion that is detachably connected to the first mounting structure, so that the bracket can mount the battery onto the vehicle. The connection points are located on two sides outside the recess of the battery, thereby improving the stress uniformity and mounting stability of the battery in the second direction. In addition, the structural design of the bracket is more flexible, thereby reducing the footprint and increasing the energy density or ground clearance of the battery.

In some embodiments, the bracket body includes: a first bracket body located on one side of the battery, the side being close to a vehicle body of the vehicle; and a second bracket body located outside the battery along the second direction. The first bracket body is connected to the bottom longitudinal beam. A first end of the second bracket body is connected to the first bracket body. The first mounting base is connected to a second end of the second bracket body. In the above technical solution, the bracket body occupies just a small space in both the second direction and the third direction, thereby increasing the energy density and the ground clearance of the battery, and reducing the weight of the bracket body. In addition, the first bracket body is directly connected to the bottom longitudinal beam, thereby avoiding occupation of the space inside the recess and making the bracket body simpler in structure.

In some embodiments, the bracket body includes: a first bracket body located on one side of the battery, the side being close to a vehicle body of the vehicle; a second bracket body located outside the battery along the second direction; and a third bracket body located inside the recess of the battery. At least one of the second bracket body or the third bracket body is connected to the bottom longitudinal beam. The bracket further includes a second mounting base. The second mounting base is located inside the recess and connected to the third bracket body. The second mounting base is configured to mount a second connecting portion that is detachably connected to a second mounting structure disposed in the recess. In the above technical solution, the bracket body can connect the first mounting base and the second mounting base together, thereby increasing the overall strength of the bracket, making it convenient to mount and fix the battery from the left end, middle part, and right end of the battery in the second direction, improving the mounting stability, and avoiding deformation of the battery.

In some embodiments, there are two second mounting bases. The two second mounting bases are disposed on two sides of the bottom longitudinal beam along the second direction respectively. The bracket further includes a connecting piece. The connecting piece is located between the bottom longitudinal beam and the recess and is configured to connect the two second mounting bases. In the above technical solution, the two second mounting bases can be connected together by the connecting piece, so as to connect the two second bracket bodies located on two sides of the bottom longitudinal beam into a whole and connect the two first bracket bodies located on two sides of the bottom longitudinal beam into a whole, and in turn, improve the overall structural strength of the bracket.

In some embodiments, the connecting piece is connected to a bottom surface of the bottom longitudinal beam. The second mounting bases each are connected to one side surface of the bottom longitudinal beam, the side surface being perpendicular to the second direction. In the above technical solution, the bracket can be connected to the bottom longitudinal beam from different side surfaces of the bottom longitudinal beam, thereby improving the connection stability.

In some embodiments, the connecting piece is formed together with the second mounting base in one piece, or the connecting piece and the second mounting base are separate parts connected together. In the above technical solution, the one-piece forming configuration can simplify the process of assembling the connecting piece and the second mounting base, and the configuration in which the connecting piece and the second mounting base are separate parts can improve the versatility of the second mounting base and reduce production cost.

According to a third aspect, an embodiment of this application further provides a vehicle. The vehicle includes the battery disclosed in the above embodiment or the bracket disclosed in the above embodiment.

### BRIEF DESCRIPTION OF DRAWINGS

FIG. 1 is a schematic diagram of a vehicle according to some embodiments of this application;
FIG. 2 is a schematic diagram of a battery and a bottom longitudinal beam according to a first embodiment of this application;
FIG. 3 is an exploded view of the battery and bottom longitudinal beam shown in FIG. 2;
FIG. 4 is a front view of assembling of the battery and bottom longitudinal beam shown in FIG. 2; and
FIG. 5 is a schematic plan view of a battery swap station according to some embodiments of this application.

### List of reference numerals:

battery 1; vehicle 1000; bottom longitudinal beam 200; longitudinal beam 201; battery swap station 2000; battery swap region 600; first region 601; second region 602;
battery body 10; housing 12; mounting slot 121; recess 13; boss 14;
first mounting structure 21; second mounting structure 22;
first mounting base 311; first connecting portion 312; second mounting base 321; second connecting portion 322;
bracket 4; bracket body 40; first bracket body 41; second bracket body 42; third bracket body 43; connecting piece 44;
first direction F1; second direction F2; third direction F3.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

The battery mentioned in embodiments of this application means a unitary physical module that includes one or more battery cells to provide a higher voltage and a higher capacity. A battery according to an embodiment of this application includes a housing configured to package one or more battery cells or a plurality of battery modules. The housing prevents liquid or other foreign matters from affecting the charging or discharging of the battery cells.

In a battery, a plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the housing. Alternatively, the plurality of battery cells are connected in series, parallel, or series-and-parallel pattern to form a battery module first, and then a plurality of battery modules are connected in series, parallel, or series-and-parallel pattern to form an entire battery for being accommodated in the housing. In addition, the battery may further include other structures. For example, the battery may further include a busbar component configured to implement electrical connection between the plurality of battery cells.

In recent years, new energy vehicles have developed by leaps and bounds. In the field of electric vehicles, batteries play an essential and irreplaceable role as a power source of electric vehicles. As a core component of a new energy vehicle, the battery is subject to high requirements in both safety and service life.

The inventor hereof finds that the battery is typically disposed at the bottom of a vehicle and located below a bottom longitudinal beam. In order to increase the cruising range, effort is put into increasing the height of the battery as much as practicable in a case that the width and length of the vehicle body are limited. Consequently, the ground clearance of the battery is relatively small. On the one hand, when there are protrusions on the ground, the battery is prone to be hit and damaged. On the other hand, during a battery swap operation, a groove needs to be reserved or the vehicle needs to be lifted up in a battery swap station, thereby resulting in a high cost of battery swap. In addition, a housing of a battery generally includes no mounting structure. Before the battery is mounted into a vehicle, the battery needs to be put into a battery swap frame that accommodates the battery, and then the battery swap frame is fastened onto the vehicle. Due to the use of the battery swap frame, the required mounting space is large, thereby making it difficult to increase the volumetric energy density of the battery in a case that the space at the bottom of the vehicle is limited, and in turn, adversely affecting the cruising range of the vehicle. Moreover, the specific structure of the battery swap frame is subject to the structural limitations of different vehicle models. For example, different bottom longitudinal beams of vehicles need to match different battery swap frames, or additional components such as spacers are required to perform mounting and debugging, thereby making the assembling complicated and increasing the production cost.

In view of the above factors, through in-depth research, the inventor hereof has designed a battery 1. A housing 12 of the battery 1 is provided with a recess 13 configured to avoid a bottom longitudinal beam 200 and with first mounting structures 21 detachably connected to the vehicle 1000, so as to efficiently utilize the space on two sides of the bottom longitudinal beam 200, and omit a battery swap frame required in the related art, and in turn, increase the energy density of the battery 1 or ground clearance of the battery 1, and facilitate battery swap design. In addition, at least two first mounting structures 21 are located on two sides outside the recess 13 respectively, so that the battery 1 can be mounted and fixed to the vehicle 1000 from two sides outside the recess 13, so as to improve the uniformity of stress on the battery 1 in the second direction F2, increase the mounting span, and improve the mounting stability.

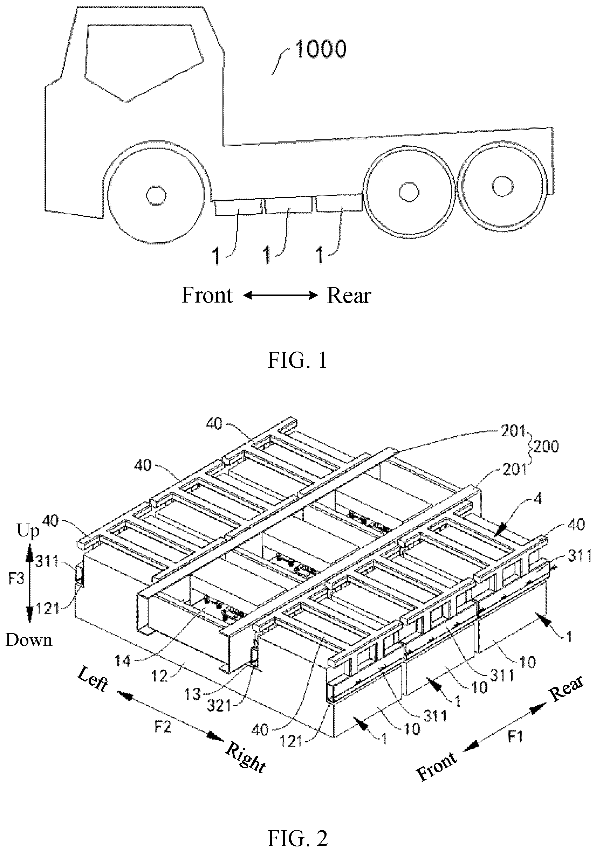

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. The battery 1 may be configured to supply power to the vehicle 1000. For example, the battery 1 may serve as an operating power supply of the vehicle 1000. The vehicle 1000 may further include a controller and a motor. The controller is configured to control the battery 1 to supply power to the motor, for example, to meet electrical energy requirements in starting, navigating, or running the vehicle 1000. In some embodiments of this application, the battery 1 serves not only as an operating power supply of the vehicle 1000, but may also serve as a driving power supply of the vehicle 1000 to provide driving power for the vehicle 1000 in place of or partly in place of fuel oil or natural gas.

The following describes a battery 1 according to some embodiments of this application with reference to drawings.

As shown in FIG. 2 to FIG. 4, the battery 1 includes a battery body 10 and a plurality of first mounting structures 21. The battery body 10 includes a battery cell and a housing 12 configured to accommodate the battery cell. The housing 12 defines a recess 13 that penetrates through the housing from one end to another end along a first direction F1. The battery 1 is adapted to be disposed at the bottom of a vehicle 1000. A bottom longitudinal beam 200 of the vehicle 1000 is adapted to run through and fit in the recess 13 along the first direction F1. The housing 12 is provided with a plurality of first mounting structures 21. The first mounting structures 21 are located outside the recess 13 and configured to detachably mount the battery body 10 into the vehicle 1000. At least two of the plurality of first mounting structures 21 are spaced apart along a second direction F2 and located on two sides outside the recess 13. The first direction F1 intersects the second direction F2.

The term "intersect" here means that the angle formed between the first direction F1 and the second direction F2 is, but without being limited to, 90°. For example, the "first direction F1" means the length direction of the vehicle 1000, or the front-rear direction of the vehicle 1000, or the longitudinal direction of the vehicle 1000; the "second direction F2" means the width direction of the vehicle 1000, or the left-right direction of the vehicle 1000, or the transverse direction of the vehicle 1000; the "third direction F3" means the height direction of the vehicle 1000, or the up-down direction of the vehicle 1000, or the vertical direction of the vehicle 1000.

In the above embodiment, the number and arrangement of the battery cells accommodated in the housing 12 are not limited, and the number may be one or more. If there are a plurality of battery cells in the housing, the plurality of battery cells may be arranged in groups or individually.

It is worth noting that "a bottom longitudinal beam 200 runs through and fits in the recess 13 along the first direction F1" means that at least a part of the bottom longitudinal beam 200 extends into the recess 13, but not all of the bottom longitudinal beam 200 is located in the recess 13. More specifically, a segment of the bottom longitudinal beam 200 in the longitudinal direction may extend into the recess 13, and further, a part or all of this segment in the vertical direction may extend into the recess 13.

Because the recess 13 adapted to avoid the bottom longitudinal beam 200 is provided at the top of the housing 12, the top wall of the battery cell accommodated in the housing 12 is conveniently made to be higher than the bottom surface of the bottom longitudinal beam 200. In this way, battery cells can be disposed by efficiently utilizing the space on both sides of the bottom longitudinal beam 200, thereby increasing the energy density of the battery 1. Alternatively, the battery cells that originally needs to be arranged at the bottom layer of the battery 1 can be transferred to two sides of the bottom longitudinal beam 200, thereby increasing the ground clearance of the battery 1, and ensuring that an enough space between the bottom of the battery 1 and the ground is reserved for battery swap operations. In addition, the increased ground clearance of the battery 1 reduces the risk of hitting or scratching the bottom of the battery 1 caused by ground protrusions and other factors, thereby improving the safety and service life of the battery 1 in use. Therefore, the recess 13 provided at the top of the housing 12 can effectively solve the problem of a low utilization rate of space, thereby improving the safety and reliability of the battery 1 and facilitating the battery swap design. In addition, the housing 12 assumes a special-shaped structure with a recess 13, thereby improving the structural strength of the housing 12 and the stability of the battery 1.

In the above embodiment, the first mounting structures 21 are disposed on the housing 12 in a way that is not limited, and may be formed together with the housing 12 to form one piece, or may be separate parts distinct from the housing 12 and directly or indirectly mounted to the housing 12. In the above embodiment, the first mounting structures 21 mount the battery body 10 to the bottom longitudinal beam 200 detachably, so that the battery 1 is detachable from the vehicle 1000, thereby meeting the needs such as replacement, charging, maintenance of the battery 1.

In addition, it is hereby noted that a first mounting structure 21 may be connected to the vehicle 1000 in a way that is not limited. A part, oriented toward the first mounting structure 21, of the bottom longitudinal beam 200, is connected to the first mounting structure directly; or, a connection structure is disposed on the bottom longitudinal beam 200 toward the first mounting structure 21, and the first mounting structure is connected to the vehicle by the connection structure indirectly.

In some embodiments of this embodiment, a first mounting structure 21 detachably connected to the vehicle 1000 is disposed on the housing 12 of the battery 1, so that the battery 1 can be mounted onto the vehicle 1000 by using the first mounting structure 21, thereby omitting the battery swap frame required in the related art for accommodating the battery, reducing the occupation of the mounting space by the battery swap frame, and in turn, increasing the volumetric energy density of the battery 1. Moreover, with the battery swap frame omitted, the cost is reduced, the load of the entire vehicle is reduced, and the battery swap efficiency is improved. In addition, the design requirements on a battery swap transport vehicle in support of battery swap operations for the battery 1 are lowered in terms of the volume and load-bearing capacity, and the design difficulty and cost of the battery swap transport vehicle are reduced.

Moreover, with the battery swap frame omitted, the ground clearance of the battery 1 is increased, thereby reducing the risk of the battery 1 being hit by ground protrusions, and improving the safety and service life of the battery 1 in use. Further, the increased ground clearance of the battery 1 facilitates battery swap operations. In some cases, the battery can be swapped on a battery swap station 2000 without a need to dig a trench or lift up the vehicle 1000. In short, the need to lift the entire vehicle or dig a trench is eliminated, thereby simplifying the site layout on the battery swap station 2000 and improving space utilization.

In addition, "the first mounting structures 21 are located outside the recess 13, and at least two of the plurality of first mounting structures 21 are spaced apart along a second direction F2 and located on two sides outside the recess 13". The first mounting structure 21 are disposed on any wall surface of the housing 12 except the wall surface of the recess 13. In addition, at least one first mounting structure 21 is located on the left side of the recess 13, and at least one first mounting structure 21 is located on the right side of the recess 13.

The recess 13 is configured to avoid the bottom longitudinal beam 200. Therefore, at least two first mounting structures 21 are located on two sides of the bottom longitudinal beam 200 along the second direction F2 respectively. On the one hand, this arrangement enables a plurality of first mounting structures 21 to implement the mounting and fixation of the battery 1 over a larger span in the width direction of the bottom longitudinal beam 200, thereby avoiding the battery 1 from tilting due to nonuniform stress between the left side and the right side, and improving the mounting stability of the battery 1. On the other hand, this arrangement prevents the first mounting structures 21 from occupying the space in the recess 13, and avoids interference with the bottom longitudinal beam 200. Further, this arrangement makes the first mounting structures 21 not prone to be blocked by the wall surface of the recess 13, and the first mounting structures can be located in a region available for observation or operation outside the recess 13, thereby facilitating the disassembly and assembly of the battery 1 in the vehicle 1000.

With the battery 1 according to an embodiment of this application, a housing 12 of the battery 1 is provided with a recess 13 configured to avoid a bottom longitudinal beam 200 and with first mounting structures 21 detachably connected to the vehicle 1000, so as to efficiently utilize the space on two sides of the bottom longitudinal beam 200, and omit a battery swap frame required in the related art, and in turn, increase the energy density of the battery 1 or ground clearance of the battery 1, and facilitate battery swap design. In addition, at least two first mounting structures 21 are located on two sides outside the recess 13 respectively, so that the battery 1 can be mounted and fixed to the vehicle 1000 from two sides outside the recess 13, so as to improve the uniformity of stress on the battery 1 in the second direction F2, increase the mounting span, and improve the mounting stability.

It is hereby noted that the first mounting structures 21 may be disposed in a flexibly selected position outside the recess 13. For example, the first mounting structures 21 may be disposed on the top wall or bottom wall of the housing 12, on the end walls at two ends of the housing along the first direction F1, or on the end walls at two ends of the housing along the second direction F2.

The top wall of the housing 12 means an end wall of the housing at an upper end along the third direction F3 outside the recess 13. The bottom wall of the housing 12 means an end wall of the housing 12 at a lower end along the third direction F3. The end walls at two ends along the first direction F1 mean a front end wall and a rear end wall of the housing 12. The end walls at two ends along the second direction F2 mean the left end wall and the right end wall of the housing 12.

In some embodiments, at least two of the first mounting structures 21 are disposed on the top wall of the housing 12. In this way, the first mounting structure 21 is closer to the bottom longitudinal beam 200, and it is more convenient to dispose a structure connected to the first mounting structures 21 on the corresponding bottom longitudinal beam 200. In addition, the battery 1 can protect the first mounting structures 21 from the lower side, so as to prevent mud and water from splashing onto the first mounting structures 21 during the movement of the vehicle 1000, prevent the mud and water from causing structural damage and interference with smooth disassembly and assembly, and improve the connection reliability of the battery 1.

In some embodiments, at least two of the first mounting structures 21 are disposed on the bottom wall of the housing 12 or on the end walls at two ends along the first direction F1. In this way, the first mounting structures 21 are in a region that makes it easier to operate, thereby facilitating the disassembly operations and observation during mounting. Moreover, the distance between the second mounting structures 21 is relatively close, thereby making it easy to improve the precision of the relative position of the first mounting structures 21 and reduce the difficulty of processing. In addition, in replacing the battery 1, due to the high precision of the relative position of the plurality of first mounting structures 21, it is easy to align each of the first mounting structures 21 on the two sides with the mounting position, thereby reducing the difficulty of battery swap and improving the efficiency of battery swap.

In some other embodiments, at least two of the first mounting structures 21 are disposed on the end walls of the housing 12 at two ends along the second direction F2, thereby maximally increasing the mounting span of the plurality of first mounting structures 21, improving the dispersivity and uniformity of the stress on the housing 12, improving the problem of stress concentration on the housing 12, and improving the mounting stability and reliability of the battery 1. In addition, the mounting positions of the first mounting structures 21 are in a region that makes it easier to operate. It is convenient to observe whether the battery is mounted in place, and the processing of the first mounting structures 21 is facilitated.

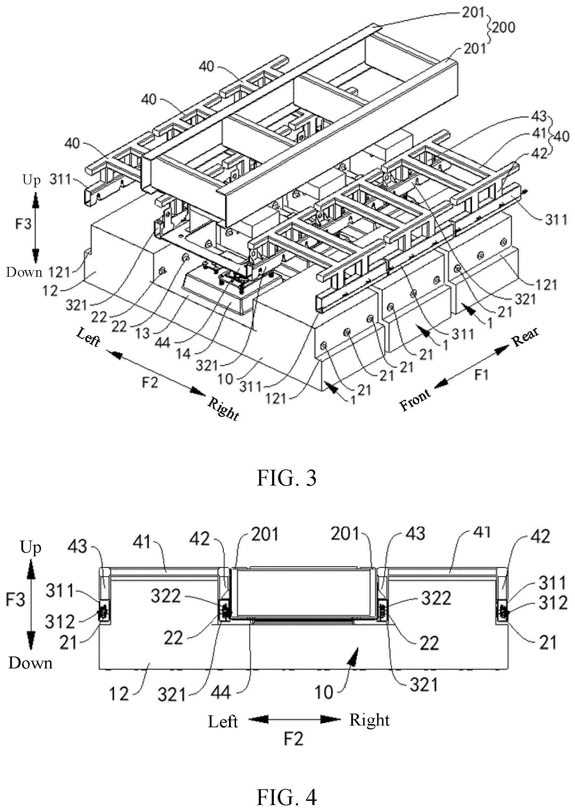

In some embodiments, as shown in FIG. 2 and FIG. 3, the housing 12 is provided with mounting slots 121 at end portions of the housing at two ends along a second direction F2. The first mounting structures 21 are at least partially located in the mounting slots 121.

In this way, the first mounting structures 21 can be protected by the mounting slots 121 to avoid being hit and damaged. In addition, this arrangement avoids the problems such as the at least part of the first mounting structures 21 is corroded by splashed mud and water and leads to inability of detachment and swap of the battery. Moreover, with the mounting slots 121 provided on the housing 12, a special-shaped structure is formed, thereby also improving the overall structural strength of the housing 12 and the stability of the battery 1.

In some embodiments, as shown in FIG. 2 and FIG. 3, the mounting slots 121 open toward the end portions away from the recess 13 along the second direction F2. For example, the mounting slot 121 located on the left sidewall of the housing 12 opens toward the left end, and the mounting slot 121 located on the right sidewall of the housing 12 opens toward the right end. The mounting slots 121 open toward the end portions of the housing, thereby facilitating the assembly of the first mounting structure 21 to the vehicle 1000 and disassembly from the vehicle, and ensuring convenient operation and ensuring the battery to be mounted in place.

In some embodiments, as shown in FIG. 2 and FIG. 3, the recess 13 opens along the third direction F3, and the bottom longitudinal beam 200 is detachably mounted in the recess 13 along the third direction F3. The mounting slots 121 open toward the same side as the recess 13 along the third direction F3. Both the first direction F1 and the second direction F2 intersect the third direction F3.

The recess 13 opens toward the upper side, and the mounting slot 121 also opens toward the upper side. During the mounting, the battery 1 can be moved from bottom to top so that the bottom longitudinal beam 200 moves from the opening of the recess 13 into the recess 13. The structure (such as a first connecting portion 312) connected to the first mounting structure 21 on the vehicle 1000 may be synchronously moved from the upper opening of the mounting slot 121 into the mounting slot 121 to get connected to the first mounting structure 21. When the battery 1 is detached from the vehicle 1000, the detachment process is opposite to the above process, thereby simplifying the process of mounting the battery 1 to the vehicle 1000, facilitating the disassembly and assembly of the battery 1, and in turn, improving the efficiency of battery swap.

In the above embodiment, the first mounting structure 21 may be disposed in a flexibly selected position in the mounting slot 121.

For example, in some embodiments, the first mounting structure 21 is disposed on a slot wall, perpendicular to the second direction F2, of the mounting slot 121, for example, disposed in the left mounting slot 121. The first mounting structure 21 may be disposed on the left slot wall of the mounting slot 121, in the right mounting slot 121; or, the first mounting structure 21 may be disposed on the right slot wall of the mounting slot 121. In this way, the position of the first mounting structure 21 is not limited by the dimensions of the mounting slot 121 along the third direction F3, and can be selected more flexibly.

For another example, in some other embodiments, the first mounting structure 21 is disposed on a slot wall, perpendicular to the third direction F3, of the mounting slot 121, for example, disposed on a lower slot wall of the mounting slot 121. In this way, during the upward movement of the battery 1, it is convenient to control the movement distance based on the status of fastening between the first mounting structure 21 and the vehicle 1000, and it is convenient to determine whether the battery 1 is mounted in place.

In addition, no matter whether the first mounting structure 21 is disposed on the slot wall, perpendicular to the second direction F2 or on the slot wall, perpendicular to the third direction F3, of the mounting slot 121, it is convenient to connect the first mounting structure 21 to the vehicle 1000, thereby making it easy to disassemble or assemble the battery 1.

According to some embodiments of this application, as shown in FIG. 2 and FIG. 3, the mounting slot 121 penetrates along the first direction F1. In other words, the mounting slot 121 opens toward both ends along the first direction F1. In this way, in the first direction F1, the length of the structure configured to be connected to the first mounting structure 21 on the vehicle 1000 is not limited by the mounting slot 121. For example, the vehicle 1000 is provided with a first connection structure. The first connection structure includes a first mounting base 311 and a first connecting portion 312 disposed on the first mounting base 311. The first connection structure is configured to be connected to the first mounting structure 21. The length of the first connection structure along the first direction F1 may be greater than, equal to, or less than the dimension of the mounting slot 121 along the first direction F1. During assembly, the mounting position of the first mounting structure 21 in the first direction F1 allows for a deviation. The battery 1 just needs to be moved forward and backward relative to the first connection structure along the first direction F1 until the first connection structure is aligned with the first mounting structure 21 to ensure smooth connection, thereby reducing the requirement on the processing precision.

In some embodiments of this application, referring to FIG. 2 and FIG. 3, at least two of the first mounting structures 21 are located at the same end of the housing 12 along the second direction F2. The at least two first mounting structures 21 located at the same end are spaced apart along the first direction F1. For example, in the example shown in FIG. 3, three first mounting structures 21 are disposed at the left end of the housing 12. The three first mounting structures 21 are arranged along the first direction F1. Three first mounting structures 21 are also disposed at the right end of the housing 12, and the three first mounting structures 21 are arranged along the first direction F1.

In this way, the plurality of first mounting structures 21 located at the same end can mount the battery 1 at a plurality of points over a larger span in the first direction F1. In addition, the first mounting structures 21 at two ends mount the battery 1 at a plurality of points in the second direction F2, thereby dispersing the stress and further improving the stability of battery 1 being mounted.

According to some embodiments of this application, referring to FIG. 2 to FIG. 4, the housing 12 is provided with second mounting structures 22. The second mounting structures 22 are located inside the recess 13. In other words, the second mounting structures 22 can connect the middle part of the housing 12 to the vehicle 1000 in the second direction F2. In this way, the left end, the middle part, and the right end of the housing 12 can all be connected to the vehicle 1000, so as to disperse the stress on the battery 1, improve the stability of the connection between the battery 1 and the vehicle 1000, and avoid deformation or dropping of the battery 1 caused by a heavy weight and stress concentration of the battery.

In the above embodiment, the second mounting structure 22 may be disposed in a flexibly selected position in the recess 13.

For example, in some embodiments, at least one second mounting structure 22 is disposed on a sidewall, perpendicular to the second direction F2, of the recess 13. In other words, the second mounting structure 22 may be disposed on the wall surface of the recess 13 at one end or both ends along the second direction F2. With the second mounting structure 22 disposed on the sidewall of the recess 13, the second mounting structure 22 is prevented from occupying the space in the height direction, thereby increasing the ground clearance of the battery 1, and ensuring that an enough space between the bottom of the battery 1 and the ground is reserved for battery swap operations. In addition, the increased ground clearance of the battery 1 reduces the risk of hitting or scratching the bottom of the battery 1 caused by ground protrusions and other factors, thereby improving the safety and service life of the battery 1 in use.

Moreover, because the second mounting structure 22 is disposed on the sidewall of the recess 13, the stress borne by the battery 1 at the second mounting structure 22 may be close to a shear stress. The stress borne by the battery 1 at the second mounting structure 22 is substantially a tensile stress. Therefore, when the second mounting structure 22 is disposed on the sidewall of the recess 13, the mounting reliability of the battery 1 can be improved.

In addition, in some specific embodiments, the second mounting structures 22 are disposed separately on two sidewalls of the recess 13 that are opposite to each other along the second direction F2. In other words, the second mounting structure 22 is disposed on both sidewalls of the recess 13. The distance between the second mounting structures 22 on the two sidewalls is relatively close. In this way, it is easy to improve the precision of the relative position of the second mounting structures 22 on the two sides of the bottom longitudinal beam 200 and reduce the difficulty of processing. In addition, in replacing the battery 1, due to the high precision of the relative position of the second mounting structures 22 on the two sidewalls, it is easy to align each of the second mounting structures 22 on the two sides with the mounting position, thereby reducing the difficulty of battery swap and improving the efficiency of battery swap.

In some embodiments in which a plurality of second mounting structures 22 are disposed on the same sidewall, the plurality of second mounting structures 22 may be arranged along the first direction F1 to improve stress uniformity, and in turn, improve the mounting stability of the battery 1.

For another example, in some embodiments, at least one second mounting structure 22 is disposed on a sidewall, perpendicular to the third direction F3, of the recess 13. Both the first direction F1 and the second direction F2 intersect the third direction F3. For example, the second mounting structure 22 may be disposed on the bottom wall of the recess 13, that is, located on a wall surface below the bottom longitudinal beam 200. This arrangement can reduce the space occupied by the second mounting structure 22 in the horizontal direction, and improve the space utilization rate of the battery 1 in the horizontal direction.

Alternatively, in some embodiments, both the sidewall perpendicular to the second direction F2 and the sidewall perpendicular to the third direction F3 of the recess 13 may be provided with a second mounting structure 22. This arrangement also falls within the protection scope of this application.

In some embodiments, there are a plurality of second mounting structures 22 disposed on the sidewall, perpendicular to the third direction F3, of the recess 13. At least two of the second mounting structures 22 are arranged along the second direction F2. By spacing two or more second mounting structures 22 apart along the second direction F2, a plurality of second mounting structures 22 can connect the battery 1 to the vehicle 1000 from a plurality of points in the transverse direction of the vehicle 1000, thereby improving the stability of the connection between the battery 1 and the vehicle 1000. Moreover, working together with the plurality of first mounting structures 21 arranged along the first direction F1, the second mounting structures spaced apart can constrain the battery in a plurality of directions, and more effectively prevent the battery 1 from shaking.

It is hereby noted that the plurality of second mounting structures 22 may be all arranged in one row along the second direction F2. Alternatively, the plurality of second mounting structures 22 may be arranged in a plurality of rows spaced apart along the first direction F1, and each row includes at least two second mounting structures 22. In this way, multi-point connections can be formed in both the first direction F1 and the second direction F2, thereby further improving stability.

In some embodiments, as shown in FIG. 2 to FIG. 4, the dimension of the battery 11 along the first direction F1 is smaller than the dimension of the battery 1 along the second direction F2, indicating that the transverse dimension of the battery 1 is relatively large while the longitudinal dimension of the battery 1 is relatively small. When the transverse dimension of the battery 1 does not exceed the transverse width of the vehicle 1000, the longitudinal dimension of the battery 1 can be prevented from being excessive. The dimensions of the battery 1 are relatively small, thereby improving the mounting reliability of the battery 1 and facilitating the mounting of the battery 1. For example, when there are 2 to 3 first mounting structures 21 on the same sidewall and the first mounting structures are spaced apart along the longitudinal direction, the stress on the first mounting structure 21 can be reduced effectively to ensure the mounting reliability of the battery 1. Moreover, the dimensions of an individual battery cell 1 are relatively small, thereby reducing the deformation of the battery 1, and improving the success rate of assembling the battery 1.

Further, when the dimensions of the battery 1 are relatively small, as shown in FIG. 1, a plurality of batteries 1 may be disposed at the bottom of the vehicle 1000, and the plurality of batteries 1 are set to be individually detachable from the vehicle 1000 for replacement. In this way, the matching number of batteries 1 can be mounted depending on the application scenario, cruising range, configurations of the vehicle 1000, and the like, thereby improving the flexibility of battery swap and achieving compatibility with different vehicle models and application scenarios. Moreover, without a need to match a single type of battery pack to one vehicle model, the adaptability of the battery swap station 2000 is improved, thereby reducing the number of battery swap stations 2000, increasing the distance between adjacent battery swap stations 2000, and reducing the investment cost.

For example, a large heavy-duty truck may be provided with six batteries 1, a tractor needs to be provided with just three batteries 1, and a small truck needs to be provided with two batteries 1. In addition, a cruising range requirement needs to be taken into consideration. For example, a tractor can run 300 to 500 km when being provided with three batteries 1, but may be provided with just two batteries 1 or one battery 1 if the tractor does not need to run such a long distance as 300 to 500 km.

Moreover, it is not necessary to mount all batteries 1 in the vehicle 1000, thereby reducing the load of the vehicle 1000. Moreover, because each battery 1 can be swapped individually, the deeply discharged battery 1 can be replaced, thereby avoiding the problem of power waste of the battery 1 caused by the replacement of the battery 1 before deep discharge.

In addition, in contrast to a whole large battery pack in use, when a plurality of relatively small batteries 1 are used in combination, it is not necessary to replace all batteries 1 once a battery is deeply discharged, the battery swap efficiency is relatively high, and the throughput of a battery swap station 2000 of the same space can be improved significantly.

A bracket 4 according to an embodiment of this application is configured to mount the battery 1 according to an embodiment of this application into a vehicle 1000. Referring to FIG. 2 to FIG. 4, the bracket 4 includes a bracket body 40 and a first mounting base 311.

The bracket body 40 is mounted in the vehicle 1000, so as to mount the bracket 4 to the vehicle 1000. The first mounting base 311 is connected to the bracket body 40. At least two first mounting bases 311 are spaced apart along the second direction F2. The first mounting base 311 is configured to mount the first connecting portion 312. The first connecting portion 312 is detachably connected to the first mounting structure 21.

In the above embodiment, the first mounting base 311 is disposed on the bracket body 40 in any manner not limited. For example, the first mounting base 311 may be formed together with the bracket body 40 in one piece, or may be a separate part connected to the bracket body 40.

The specific structure of the first mounting base 311 is not limited, and may be a plate, a tube, a frame, or the like. In some embodiments, the first mounting base 311 is provided with a channel. The first connecting portion 312 is disposed in the channel, and the first mounting structure 21 extends into the channel to get connected to the first connecting portion 312, or the first connecting portion 312 is partially passed out of the channel to get connected to the first mounting structure 21.

In this application, at least two first mounting bases 311 are spaced apart along the second direction F2. In this way, at least two first connecting portions 312 can be spaced apart along the second direction F2, and therefore, at least two first connecting portions 312 can connect the battery 1 to the vehicle 1000 from two sides outside the recess 13 of the battery 1, so as to ensure the stability of the mounting and fixation of the battery 1. In addition, when the first connecting portion 312 is connected to the first mounting structure 21, the battery 1 can be mounted and fixed. When the first connecting portion 312 is detached from the first mounting structure 21, the battery 1 can be detached from the vehicle 1000 to implement disassembly of the battery 1, thereby facilitating the replacement, repair, maintenance, and the like of the battery 1.

Further, the battery 1 is indirectly mounted to the vehicle 1000 by the bracket 4, for example, indirectly mounted to the bottom longitudinal beam 200, thereby reducing or avoiding the changes to the original structure of the vehicle 1000 and reducing production cost. In addition, the structure of the bracket 4 can be flexibly adjusted based on the position of the first mounting structure 21 on the battery 1, so as to meet the requirement of mounting and fixing different batteries 1. Moreover, the bracket 4 is smaller in size and occupies less space than the battery swap frame in the related art, thereby increasing the energy density or ground clearance of the battery 1.

In the above embodiment, the number of first connecting portions 312 on the first mounting base 311 may be one or more. At least two of the plurality of first connecting portions 312 may be spaced apart along the first direction F1 to improve the stress uniformity and mounting stability of the battery 1 in the first direction F1.

With the bracket 4 according to this embodiment of this application, at least two first mounting bases 311 are spaced apart along the second direction F2, and are configured to mount the first connecting portion 312 that is detachably connected to the first mounting structure 21, so that the bracket 4 can mount the battery 1 onto the vehicle 1000. The connection points are located on two sides outside the recess 13 of the battery 1, thereby improving the stress uniformity and mounting stability of the battery 1 in the second direction F2. In addition, the structural design of the bracket 4 is more flexible, thereby reducing the footprint and increasing the energy density or ground clearance of the battery 1.

In some embodiments, as shown in FIG. 2 to FIG. 4, the bracket body 40 includes a first bracket body 41 and a second bracket body 42. The first bracket body 41 is located on one side, close to the body of the vehicle 1000, that is, the upper side, of the battery 1; and the second bracket body 42 is located outside the battery 1 along the second direction F2, so that the bracket body 40 is roughly L-shaped. The first bracket body 41 is connected to the bottom longitudinal beam 200. The first end of the second bracket body 42 is connected to the first bracket body 41. The first mounting base 311 is connected to the second end of the second bracket body 42.

In the above embodiment, the first bracket body 41 and the second bracket body 42 may be formed by splicing several bars, or may be a plate structure, or may be a plate with holes, or the like. The bracket body 40 occupies just a small space in both the second direction F2 and the third direction F3, thereby increasing the energy density and the ground clearance of the battery 1, and reducing the weight of the bracket body 40. In addition, the first bracket body 41 is directly connected to the bottom longitudinal beam 200, thereby avoiding occupation of the space inside the recess 13 and making the bracket body 40 simpler in structure.

It is hereby noted that, in an embodiment in which a plurality of batteries 1 are mounted in the vehicle 1000, each battery 1 may be individually provided with a corresponding bracket 4. In other words, a plurality of brackets 4 are independent of each other, without interfering with each other in structure and position, thereby facilitating structural arrangement and reducing weight.

In some other embodiments, as shown in FIG. 2 to FIG. 4, the bracket body 40 includes a first bracket body 41, a second bracket body 42, and a third bracket body 43. The first bracket body 41 is located on one side, close to the body of the vehicle 1000, of the battery 1; the second bracket body 42 is located outside the battery 1 along the second direction F2; and the third bracket body 43 is located inside the recess 13 of the battery 1. At least one of the second bracket body 42 or the third bracket body 43 is connected to the bottom longitudinal beam 200. In other words, the second bracket body 42 alone is connected to the bottom longitudinal beam 200, or, the third bracket body 43 alone is connected to the bottom longitudinal beam 200, or, both the second bracket body 42 and the third bracket body 43 are connected to the bottom longitudinal beam 200.

In addition, the bracket 4 further includes a second mounting base 321. The second mounting base 321 is located inside the recess 13 and connected to the third bracket body 43. The second mounting base 321 is configured to mount a second connecting portion 322. The second connecting portion 322 is detachably connected to a second mounting structure 22 disposed in the recess 13.

In the above embodiment, the structure of the second mounting base 321 may be the same as or different from the structure of the first mounting base 311. When the structures are the same, the versatility of the mounting base is improved, and cost is reduced. The number of second connecting portions 322 may be one or more. At least two of the plurality of second connecting portions 322 may be spaced apart along the first direction F1 to improve the stress uniformity and mounting stability of the battery 1 along the first direction F1.

In this embodiment of this application, the connection method between the first connecting portion 312 and the first mounting structure 21, and the connection method between the second connecting portion 322 and the second mounting structure 22 are not limited. The connection methods may be at least one of snap-on connection, latch, threaded connection, or the like.

Through the third bracket body 43 disposed, a second mounting base 321 can be disposed on the bracket body 40, so that the second connecting portion 322 disposed on the second mounting base 321 can extend into the recess 13 of the battery 1 to get connected and fixed to the second mounting structure 22, thereby mounting and fixing the battery 1 from the left end, middle part, and right end of the battery 1 in the second direction F2, improving the mounting stability, and preventing the battery 1 from being deformed. Moreover, the first bracket body 41, the second bracket body 42, and the third bracket body 43 work together to increase the overall structural strength of the bracket body 40, thereby also improving the mounting stability of the battery 1.

In some embodiments, referring to FIG. 2 to FIG. 4, two second mounting bases 321 are disposed. The two second mounting bases 321 are disposed on two sides of the bottom longitudinal beam 200 along the second direction F2 respectively. The bracket 4 further includes a connecting piece 44. The connecting piece 44 is located between the bottom longitudinal beam 200 and the recess 13, and is configured to connect the two second mounting bases 321.

The two second mounting bases 321 can increase the connection points between the battery 1 and the vehicle 1000 in the second direction F2, so as to further improve the stress uniformity and mounting stability of the battery 1. The connecting piece 44 may be a structure such as a plate, a bar, or a mesh plate. The two second mounting bases 321 are connected together by the connecting piece 44, so as to connect the two second bracket bodies 42 located on two sides of the bottom longitudinal beam 200 into a whole and connect the two first bracket bodies 41 located on two sides of the bottom longitudinal beam into a whole, and in turn, improve the overall structural strength of the bracket 4.

It is hereby noted that the connecting piece 44 and the second mounting base 321 may be a one-piece component or separate parts connected together. For example, in the examples shown in FIG. 2 to FIG. 4, the connecting piece 44 and the second mounting bases 321 at both ends are a one-piece component, and are formed by sheet metal deformation such as metal sheet bending, and then connected to the third bracket body 43 by welding.

When the connecting piece 44 is formed together with the second mounting base 321 in one piece, the assembling steps are reduced, and the overall structural strength of the bracket 4 is improved. When the connecting piece 44 and the second mounting base 321 are separate parts connected together, the structure of the second mounting base 321 can be identical for the bottom longitudinal beams 200 of different widths in different vehicle models except a need to adjust the dimension of the connecting piece 44 along the second direction F2, thereby improving the applicability of the second mounting base 321 and reducing cost.

In some specific embodiments, the connecting piece 44 may be a telescopic piece extendable and retractable along the second direction F2. In this way, the dimension of the connecting piece 44 along the second direction F2 can be adjusted based on the width of the matching bottom longitudinal beam 200, so as to ensure compatibility with different vehicle models.

According to some embodiments of this application, as shown in FIG. 2 to FIG. 4, the connecting piece 44 is connected to a bottom surface of the bottom longitudinal beam 200, and the second mounting bases 321 each are connected to one side surface of the bottom longitudinal beam 200, the side surface being perpendicular to the second direction F2. In this way, the bracket 4 can be connected to the bottom longitudinal beam 200 from different side surfaces of the bottom longitudinal beam 200, thereby improving the connection stability.

In the above embodiment, the connecting piece 44 and the second mounting base 321 each are connected to the bottom longitudinal beam 200 in any manner not limited, for example, by welding or fasteners.

In addition, in some specific embodiments, as shown in FIG. 3, the second mounting base 321 is provided with an upward extending lug. A bolt passes through the lug and the bottom longitudinal beam 200 to connect the second mounting base 321 and the bottom longitudinal beam 200. The connecting piece 44 is provided with a through-hole. The housing 12 of the battery 1 is provided with a connecting hole. The bolt passes through the bottom longitudinal beam 200, the through-hole of the connecting piece 44, and the connecting hole of the housing 12 to connect the bottom longitudinal beam 200 and the connecting piece 44 while getting connected to the battery 1, thereby further improving the mounting stability of the battery 1.

In some embodiments, the bottom wall of the recess 13 of the battery 1 is provided with a boss 14 protruding upward. The connecting piece 44 may be provided with a through-hole to avoid the boss 14. The boss 14 passes through the through-hole so that the boss 14 is available for mounting other structures (such as a docking structure that docks with the vehicle 1000 to implement transmission of power or liquid) or constraining the position.

The vehicle 1000 according to an embodiment of this application includes the battery 1 according to an embodiment of this application or the bracket 4 according to an embodiment of this application. The battery 1 or bracket 4 according to an embodiment of this application produces the above beneficial effects. Therefore, with the vehicle 1000 according to an embodiment of this application, a housing 12 of the battery 1 is provided with a recess 13 configured to avoid a bottom longitudinal beam 200 and with first mounting structures 21 detachably connected to the vehicle 1000, so as to efficiently utilize the space on two sides of the bottom longitudinal beam 200, and omit a battery swap frame required in the related art, and in turn, increase the energy density of the battery 1 or ground clearance of the battery 1, and facilitate battery swap design. In addition, at least two first mounting structures 21 are located on two sides outside the recess 13 respectively, so that the battery 1 can be mounted and fixed to the vehicle 1000 from two sides outside the recess 13, so as to improve the uniformity of stress on the battery 1 in the second direction F2, increase the mounting span, and improve the mounting stability.

The following describes a battery swap station 2000 according to an embodiment of this application with reference to drawings.

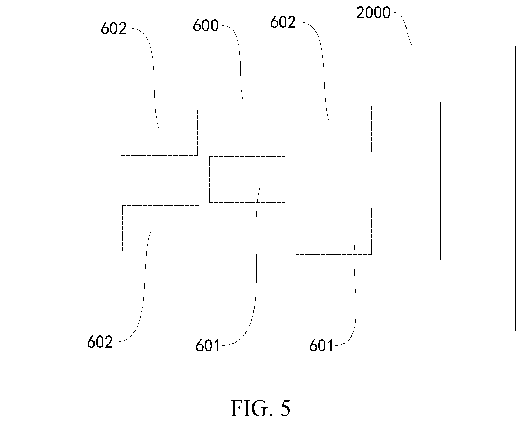

As shown in FIG. 5, the battery swap station 2000 is configured to replace a battery 1 for a vehicle 1000 disclosed according to any embodiment of this application.

In some embodiments, the battery swap station 2000 includes a battery swap region 600. The vehicle 1000 is adapted to replacing the battery 1 in the battery swap region 600. The battery swap region 600 includes a first region 601 and a second region 602. The first region 601 is adapted to be located directly below the battery 1. The second region 602 is configured to support the front wheels and the rear wheels adjacent to the battery 1. The first region 601 and the second region 602 are flush with the ground.

Because the ground clearance of the battery 1 according to some embodiments of this application can be increased, the battery swap station 2000 can eliminate the need to lift up the entire vehicle or dig a trench, thereby simplifying the site layout of the battery swap station 2000 and improving space utilization.

Optionally, the ground of the battery swap region 600 is flat on the whole, thereby reducing the difficulty of construction of the battery swap station 2000 and reducing the construction cost of the battery swap station 2000.

The following describes, with reference to drawings, a battery 1 according to a specific embodiment of this application and a vehicle 1000 containing the battery.

The vehicle 1000 includes a bottom longitudinal beam 200 and a battery body 10. The bottom longitudinal beam 200 includes two longitudinal beams 201 extending along the first direction F1 and arranged along the second direction F2. A bracket 4 is disposed on the bottom longitudinal beam 200. The bracket 4 is provided with a first mounting base 311 and a second mounting base 321. The first mounting base 311 is configured to mount the first connecting portion 312, and the second mounting base 322 is configured to mount the second connecting portion 322. The battery body 10 is mounted by the first mounting structures 21 located at the two ends along the second direction F2 and the second mounting structure 22 located inside the recess 13. The first mounting structures 21 are detachably connected to the first connecting portion 312, and the second mounting structure 22 is detachably connected to the second connecting portion 322. Therefore, the battery body 10 is connected to the bottom longitudinal beam 200, and the battery is swapped by using the chassis of the two longitudinal beams 201 of the vehicle 1000. The center of gravity of the battery body 10 lies below the longitudinal beam 201, thereby effectively lowering the center of gravity of the battery body 10, improving the stability of the battery body 10, and greatly improving the stability and safety of the vehicle 1000. This arrangement also achieves the advantages of a compact structure and a high space utilization rate (especially the space in the vertical direction).

In the related art, the battery needs to be pre-mounted on the battery swap frame before the entire battery swap frame is fixed to the vehicle. Because the battery is pre-mounted on the battery swap frame, the entire battery swap unit is very large and heavy. Therefore, the battery swap AGV that matches the batteries needs to be larger and more load-bearing, and the design is also more complicated. Secondly, because the batteries are integrated together, more battery swap frames are needed to withstand stress. Therefore, the volume percentage of the battery swap frame is also higher, thereby limiting the electrical charge of the battery swap system, and limiting the distance between different battery swap stations. Thirdly, because all the batteries are integrated together to serve as a battery swap unit, the span of the fastening points is relatively large, and the deviation between the fastening points is also large. Therefore, the fastening time is prolonged during battery swap, and the success rate of the fastening during battery swap is reduced, thereby greatly bottlenecking the efficiency of battery swap. Finally, because the batteries are integrated as a whole that serves as a battery swap unit, one vehicle model can match just one battery model. Even in different application scenarios, one vehicle model can match just one type of battery. Therefore, the flexibility of battery swap is low, and the product compatibility is low.

By contrast, in this application, each battery body 10 is separately mounted to the bottom longitudinal beam 200 of the vehicle through the first mounting structure 21 and the second mounting structure 22, thereby reducing the space occupied by the battery exchange frame, effectively solving the problem of a low space utilization rate, and increasing the energy density of the battery swap system. By virtue of a separate-pack system, a pack of different numbers of battery bodies 10 can match a different application scenario and vehicle model. The separate packaging further reduces the size of the battery body 10, thereby reducing the span between the mounting structures, improving the precision of spacing between the mounting structures, and effectively improving the success rate of fastening. In addition, the connection between the first mounting structure 21 and the first connecting portion 312 as well as the connection between the second mounting structure 22 and the second connecting portion 322 are implemented in the form of snap-on connection, thereby greatly improving the battery swap efficiency. By virtue of the sub-pack system, the volume of the battery body 10 is significantly smaller than that in the conventional technical solution, thereby optimizing both the design of the battery swap AGV and the design of the battery swap station 2000.

In addition, the second mounting structure 22 is arranged inside the recess 13 of the battery body 10, and the first mounting structure 21 is arranged at two ends of the battery body 10 along the second direction F2. Fastening points are available at the left end, the middle part, and the right end of the battery body 10. The connection between the battery body 10 and the bottom longitudinal beam 200 is more stable, and the structural strength is higher. Because the battery 1 is directly fastened to the bottom longitudinal beam 200 through the bracket 4, the footprint and weight of the battery swap frame in the related art are reduced, thereby increasing the energy density of the product. In addition, the dimension of the battery body 10 along the second direction F2 is larger than the dimension of the battery body along the first direction F1, thereby downsizing the battery body 10, reducing the span between a plurality of mounting structures on the same side, and improving the fastening precision and the fastening efficiency.

In the examples shown in FIG. 2 to FIG. 4, the first connecting portion 312 is integrated onto the first mounting base 311, and the second connecting portion 322 is integrated onto the second mounting base 321. The first mounting base 311 is connected to the second mounting base 321 by the bracket body 40, and then the bracket 4 is fixed as a whole onto the bottom longitudinal beam 200.

The battery body 10 assumes a special-shaped structure. The middle part of the battery body assumes a U-shaped concave structure to form a recess 13, and the end portions of the battery body assume a recessed structure to form a mounting slot 121. This structural form not only increases the structural strength, but also utilizes the space at different positions, thereby also increasing the energy density to an appropriate extent. In this structure, a connection structure is disposed in the middle part and at both ends of the battery body 10. Therefore, the connection between the battery 1 and the bottom longitudinal beam 200 is further strengthened, thereby effectively increasing the structural strength of the battery 1 after the battery swap. The entire battery swap system is formed by combining a plurality of matching batteries 1, thereby being adaptable to different battery swap scenarios and vehicle models.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery (1), comprising:
a battery body (10), wherein the battery body (10) comprises a battery (1) cell and a housing (12) configured to accommodate the battery (1) cell, the housing (12) defines a recess (13) that penetrates through the housing from one end to another end along a first direction (F1), the battery (1) is adapted to be disposed at a bottom of a vehicle (1000), and a bottom longitudinal beam (200) of the vehicle (1000) is adapted to run through and fit in the recess (13) along the first direction (F1); and
the housing (12) is provided with a plurality of first mounting structures (21), the first mounting structures (21) are located outside the recess (13) and configured to detachably mount the battery body (10) into the vehicle (1000), at least two of the plurality of first mounting structures (21) are spaced apart along a second direction (F2) and located on two sides outside the recess (13), and the first direction (F1) intersects the second direction (F2).

2. The battery (1) according to claim 1, wherein at least two of the plurality of first mounting structures (21) are disposed on a top wall or a bottom wall of the housing (12) or on end walls at two ends of the housing along the first direction (F1).

3. The battery (1) according to claim 1, wherein at least two of the plurality of first mounting structures (21) are disposed on end walls of the housing (12) at two ends along a second direction (F2).

4. The battery (1) according to claim 1 or 3, wherein the housing (12) is provided with mounting slots (121) at end portions of the housing at two ends along a second direction (F2), and the first mounting structures (21) are at least partially located in the mounting slots (121).

5. The battery (1) according to claim 4, wherein the mounting slots (121) open toward the end portions away from the recess (13) along the second direction (F2).

6. The battery (1) according to claim 4 or 5, wherein the recess (13) opens along a third direction (F3), the bottom longitudinal beam (200) is detachably mounted in the recess (13) along the third direction (F3), the mounting slots (121) each open toward a same side as the recess (13) along the third direction (F3), and both the first direction (F1) and the second direction (F2) intersect the third direction (F3).

7. The battery (1) according to claim 6, wherein the first mounting structures (21) each are disposed on a slot wall, perpendicular to the second direction (F2), of the mounting slot (121), or, the first mounting structures (21) each are disposed on a slot wall, perpendicular to the third direction (F3), of the mounting slot (121).

8. The battery (1) according to any one of claims 4 to 7, wherein the mounting slots (121) penetrate along the first direction (F1).

9. The battery (1) according to any one of claims 1 to 8, wherein at least two of the first mounting structures (21) are located at a same end of the housing (12) along the second direction (F2), and the at least two first mounting structures (21) located at the same end are spaced apart along the first direction (F1).

10. The battery (1) according to any one of claims 1 to 9, wherein the housing (12) is provided with second mounting structures (22), and the second mounting structures (22) are located inside the recess (13).

11. The battery (1) according to claim 10, wherein at least one of the second mounting structures (22) is disposed on a sidewall, perpendicular to the second direction (F2), of the recess (13); and/or, at least one of the second mounting structures (22) is disposed on a sidewall, perpendicular to a third direction (F3), of the recess (13); and both the first direction (F1) and the second direction (F2) intersect the third direction (F3).

12. The battery (1) according to claim 11, wherein the second mounting structures (22) are disposed separately on two sidewalls of the recess (13) that are opposite to each other along the second direction (F2).

13. The battery (1) according to claim 11 or 12, wherein, there are a plurality of second mounting structures (22) disposed on the sidewall, perpendicular to the third direction (F3), of the recess (13); and at least two of the second mounting structures (22) are arranged along the second direction (F2).

14. A bracket (4), wherein the bracket is configured to mount the battery (1) according to any one of claims 1 to 13 onto a vehicle (1000), and the bracket (4) comprises:
a bracket body (40), wherein the bracket body (40) is mounted on the vehicle (1000); and
a first mounting base (311), wherein the first mounting base (311) is connected to the bracket body (40), at least two first mounting bases (311) are spaced apart along the second direction (F2), and the first mounting base (311) is configured to mount a first connecting portion (312) that is detachably connected to the first mounting structure (21).

15. The bracket (4) according to claim 14, wherein the bracket body (40) comprises: a first bracket body (41) located on one side of the battery (1), the side being close to a vehicle body of the vehicle (1000); and a second bracket body (42) located outside the battery (1) along the second direction (F2); the first bracket body (41) is connected to the bottom longitudinal beam (200), a first end of the second bracket body (42) is connected to the first bracket body (41), and the first mounting base (311) is connected to a second end of the second bracket body (42).

16. The bracket (4) according to claim 14, wherein the bracket body (40) comprises: a first bracket body (41) located on one side of the battery (1), the side being close to a vehicle body of the vehicle (1000); a second bracket body (42) located outside the battery (1) along the second direction (F2); and a third bracket body (43) located inside the recess (13) of the battery (1); and at least one of the second bracket body (42) or the third bracket body (43) is connected to the bottom longitudinal beam (200); and
the bracket (4) further comprises a second mounting base (321), the second mounting base (321) is located inside the recess (13) and connected to the third bracket body (43), and the second mounting base (321) is configured to mount a second connecting portion (322) that is detachably connected to a second mounting structure (22) disposed in the recess (13).

17. The bracket (4) according to claim 16, wherein there are two second mounting bases (321), the two second mounting bases (321) are disposed on two sides of the bottom longitudinal beam (200) along the second direction (F2) respectively, the bracket (4) further comprises a connecting piece (44), and the connecting piece (44) is located between the bottom longitudinal beam (200) and the recess (13) and is configured to connect the two second mounting bases (321).

18. The bracket (4) according to claim 17, wherein the connecting piece (44) is connected to a bottom surface of the bottom longitudinal beam (200), and the second mounting bases (321) each are connected to one side surface of the bottom longitudinal beam (200), the side surface being perpendicular to the second direction (F2).

19. The bracket (4) according to claim 17 or 18, wherein the connecting piece (44) is formed together with the second mounting base (321) in one piece, or the connecting piece (44) and the second mounting base (321) are separate parts connected together.

20. A vehicle (1000), comprising the battery (1) according to any one of claims 1 to 13 or the bracket (4) according to any one of claims 14 to 19.
